# EUROPÄISCHE PATENTSCHRIFT

(11) **EP 1 931 824 B1**
(45) Veröffentlichungstag und Bekanntmachung des Hinweises auf die Patenterteilung: **16.11.2011**
(21) Anmeldenummer: 06793666.6
(22) Anmeldetag: 20.09.2006
(51) Int. Cl.: D06M 16/00, D06M 23/16, B68C 5/00, A62B 17/08, A41D 13/00

(54) **PFERDEDECKE ZUM SCHUTZ VON TIEREN VOR INSEKTEN**
HORSE BLANKET FOR PROTECTING ANIMALS AGAINST INSECTS
COUVERTURE POUR CHEVAL POUR PROTEGER LES ANIMAUX DES INSECTES

(30) Priorität: 26.09.2005 DE 102005046013
(43) Veröffentlichungstag der Anmeldung: 18.06.2008
(73) Patentinhaber: Hexonia GmbH, 41334 Nettetal (DE)
(72) Erfinder: HEXELS, Gerd, 41334 Nettetal (DE)
(74) Vertreter: Schmid, Wolfgang
(86) Internationale Anmeldenummer: PCT/EP2006/066536
(87) Internationale Veröffentlichungsnummer: WO 2007/036467

(56) Entgegenhaltungen:
- EP-A- 0 382 382
- EP-A- 0 787 851
- DE-U1-202004 001 947
- DE-U1-202005 004 056
- JP-A- 11 151 051
- US-A- 2005 118 383
- US-A- 2005 118 383

## Beschreibung

Die Erfindung betrifft eine Pferdedecke gemäß dem Oberbegriff von Anspruch 1. Die erfindungsgemäße textile Vorrichtung vermag aufgrund der Kombination von mechanischer und chemischer Wirkung Tiere. Insbesondere Pferde, äußerst wirksam vor blutsaugenden Insekten zu schützen. Gleichzeitig weist die Vorrichtung einen so hohen Tragekomfort für die zu schützenden Tiere auf, dass diese die Vorrichtung nicht als störend empfinden.

Vektoren, das heißt blutsaugende Insekten wie beispielsweise Flöhe, Stechmücken, Schnaken, Zecken und ähnliche Tiere sind häufig Überträger von Krankheiten. Neben dieser gefährlichen Wirkung sind die Stiche dieser Insekten schmerzhaft und unangenehm.

Aus dem Stand der Technik sind Insektenschutzdecken für Pferde bekannt. So beschreibt die DE 29609603 U1 eine Netzdecke, die auch beim Reiten verwendet werden kann. Die Wirkungsweise dieser bekannten netzartigen Pferdedecken beruht darauf, dass sich durch die Bewegung des Pferdes oder das Zucken seiner Haut Insbesondere beim Landen der Insekten auf der Haut, die Öffnungen der Netzdecke relativ zur Haut verschieben, so dass gelandete Insekten abgestreift werden. Gegenüber geschlossenen engmaschigen Decken weisen die Netzdecken den Vortell auf, dass sie die gesundheitsfördernde Einwirkung von Sonnenlicht und Luft auf die Haut und Insbesondere die Abfuhr von Schweiß ermöglichen, so dass diese Im Allgemeinen bevorzugter sind. Auch vermögen geschlossene, engmaschige Decken das Stechen der Insekten durch die Decken nicht immer zu verhindern. Weiterhin ist bei diesen Decken die Wärmeabfuhr und Feuchtlgkelts- bzw. Schweißabfuhr sehr problematisch. Auch die netzartigen Decken weisen Jedoch noch erhebllche Wlrksamkeltsdefizite auf. So können diese das Landen der Insekten auf dem Fell des Tieres zunächst nicht verhindern, Daher kann es In einigen Fällen bereits zu einem Stich kommen, bevor das Tier reagiert und zuckt. Selbst wenn das Insekt nicht mehr zum Stechen kommt, ist das ständige Landen der Insekten und der dadurch ausgelöste Bewegungsreiz gleichwohl für das Tier mit einer großen Beeinträchtigung seines Wohlbefindens verbunden. Dabei kann es auch zu nervösen Reaktionen des Tieres kommen, die zu einer Gefahr für den Menschen führen können.

Es bestand daher der starke Wunsch nach der Bereitstellung einer deutlich verbesserten Vorrichtung zum Schutz von Tieren, Insbesondere Pferden, vor Insekten, die auch bereits ein Landen der Insekten und die damit elnhergehende Beeinträchtigung des Wohlbefindens des Tieres zu verhindern vermag, und gleichwohl über einen hohen Tragekomfort verfügt.

Einige Patentveröffentlichungen befassen sich mit textllen Schutzausrüstungen für Menschen. Dazu Ist belspielsweise aus EP 1 549 163 A1 eine Schutzausrüstung für Menschen gegen Insekten bekannt, mit einem Schutznetz aus einem atmungsaktiven Gewebe zur Bedeckung von Kopf, Körper, Armen, Händen, Beinen und Füßen. Das Schutznetz kann klebrig sein und mit einem Insektizid beschichtet sein. Das Patent enthält jedoch weder Angaben über das Gewebematerial noch über die Art und den Auftrag des Insektlzlds. Weiterhin wird In der DE 20 2005 004056 U1 ein textiles Flächengebilde zur Herstellung einer Schutzbekleldung gegen Vektoren beschrieben. Dabei bildet die Verwendung von Aramidfasern (Aromatische Polyamld-Polyimld-Verbindungen) jedoch ein wesentliches Merkmal. Dieses textile Flächengebilde ist hinsichtlich der Gleichmäßigkeit des Auftrags des Insektizids noch verbesserungswürdig, was offenbar mit der Verwendung der Aramidfaser zusammenhängt. Weiterhin sind aus der EP-A-0731 208 Gewebe bekannt, die Permethrln und Polyvinylacetat In der Faser enthalten, wodurch die Waschbestöndigkeit verbessert werden soll. All diesen Veröffentlichungen Ist jedoch nicht der geringste Hinweis auf die erfindungsgemäße Aufgabenstellung zu entnehmen. Zum weiteren stand der Tecknit wird ferner auf die JP 11151051 A verwiesen.

Der Erfindung liegt der Gedanke zugrunde, eine Vorrichtung zum Schutz von Pferdem vor Insekten zu schaffen, die einen hohen, die Tiere praktisch nicht störenden Tragekomfort aufweist, und gleichzeitig bewirkt, das Insekten bei Kontakt mit der Vorrichtung insbesondere aber auch bereits In der näheren Umgebung der Vorrichtung abgeschreckt, gelähmt oder gar getötet werden,

Die vorliegende Erfindung stellt eine Pferdedecke zum Schutz von Tieren vor Insekten bereit, umfassend ein textlles Flächengebilde aus synthetischen Fasern, die aus einem Fasermaterial bestehen, das aus der Gruppe ausgewählt wird, die besteht aus: Polyestern, Polyesteramiden, Polyacrylnitrll, Polyethylen. Polypropylen, Modocryl, Polyvlnylchlorld, Polyvinylalkohol, Polyurethan, Celluloseacetat, Viskose, Copolymere der genannten Polymere und Mischungen der genannten Fasermaterlallen, wobei das textile Flachengebilde wenigstens ein Insektlzid aufweist.

Tiere im Sinne der Erfindung schließen dabel Pferde ein. Der Begriff Tiere' schließt Menschen nicht ein.

Die erfindungsgemäße Decke ist ein textiles Flächengebilde aus synthetischen Fasern. Ein textiles Flächengebilde kann gemäß dieser Erfindung beispielsweise durch Weben, Stricken, Verfestigen zu einem Vliesstoff oder auch durch Wirken einzelner Fasern erfolgen. Eine Faser Ist ein Im Verhältnls zur Länge dünnes und flexibles Gebilde. Im Rahmen dieser Erfindung sind unter Fasern Kunstfasern zu verstehen, die synthetische Polymere enthalten und bevorzugt daraus bestehen.

Geeignete Fasermaterialien werden dabei zweckmäßig ausgewählt aus Polyestern, wie Polyethylenterephthalat, Polyesteramiden, Polyacrylnitrll. Polyethylen, Polypropylen, Modocryl, Polyvinylchlorid, Polyvinylalkohol, Polyurethan (Elastan), Celluloseacetat, Viskose, Copolymere der genannten Polymere und physikalische Mischungen der genannten Fasermaterialien. Sie werden in an sich bekannter Weise durch Polymerisation, Polyaddition. Polykondensation hergestellt. Besondere bevorzugte Fasermaterialien sind Polyester Insbesondere die Verwendung von Polyestern erlaubt einen besonders glelchmößigen Auftrag des Insektizids auf das textile Flächengebilde, Insbesondere bei Auftrag im Foulardverfahren. Das bedeutet, dass wenn für eine gegebene Fläche des textilen Flächengebildes die Auftragsmenge des Insektizids an verschiedenen Stellen gemessen wird, die Streuung der beispielsweise durch Extraktion bestimmten Auftragsmenge des Insektizids insbesondere im Vergleich zu Aramidfasern verringert ist.

Das erfindungsgemäße textiles Flächengebilde weist mindestens Permethzin als Insektizid auf. Im Rahmen dieser Erfindung werden unter einem Insektizid sowohl natürliche als auch synthetische Insektizide verstanden, die schädigend, abwehrend oder vertreibend auf Insekten, insbesondere blutsaugende Insekten wirken. Zu den natürlichen Insektiziden gehören neben Pyrethrum, Rotenoide, Alkaloide und Cumarine auch reine Repellentien (z. B. Ether und Öle), die auf Insekten lediglich abschreckend wirken ohne dabei toxisch zu sein. Als Beispiele für synthetische Insektizide sind zu nennen DDT, Aldrin, Dieldrin, Chlordan, Lindan, Heptachlor, Toxaphen, Parathion, Carbamate, wie beispielsweise Carbaryl, Carbofuran, Propoxur und Pyrethroide, wie z. B. Allethrin, Cyfluthrin und Permethrin. Im Rahmen der Erfindung haben sich insbesondere Permethrin, Dimethylphthalat (DMP), N,N-Diethyl-m-toluamid (DEET), Dimethylcarbat oder 2-Ethyl-1 ,3-hexandiol, sowie auch Octonsdurediethylamid, 2-(Octylthio)ethanol und 3-(N-Acetyl-N-butylamino)propionsäureethylester als besonders geeignet herausgestellt, wobei Permethrin am bevorzugtesten ist.

Die Menge des Insektizid hängt naturgemäß von der Art des verwendeten Insektizids, der Art des Auftragsverfahrens sowie von der Art der Faser oder des textilen Flächengebildes ab. Bevorzugt beträgt sie im Falle des. Permethrins mindestens etwa 800 mg/m², bevorzugter mindestens etwa 1000 mg/m² des textilen Flächengebildes. Insbesondere über das Polymer-Coating-Verfahren lassen sich problemlos noch größere Mengen des Insektizids eintragen, wie beispielsweise bis zu 1600 mg/m².

Die erfindungsgemäß verwendeten synthetischen Fasern werden mindestens einer Hydrophilierungsbehandlung unterworfen, die zu einer permanenten hydrophilen Ausrüstung der synthetischen Fasern führt. Die Hydrophilierungsbehandlung der synthetischen Fasern des Textilgrundgebildes kann in an sich bekannter Weise erfolgen, Dazu ist beispielsweise ein Auszugsverfahren für synthetische Fasern bekannt, wie es in der US 5,855,623 offenbart wird. Bei diesem Verfahren wird die Oberfläche der Faser durch Aufpfropfen geeigneter Monomere hydrophiliert. Bezüglich geeigneter Monomere, Fasern und Verfahren kann daher auf die genannte Patentschrift verwiesen werden. Weiterhin kann die hydrophile Ausrüstung der synthetischen Fasern auch wie in der DE 20 2005 004056 U1 beschrieben erfolgen.

Die Hydrophilierungsbehandlung hat zum Einen die Wirkung, dass damit eine Verbesserung des Tragekomforts einhergeht, in dem die Feuchtigkeitsabfuhr bzw. die Trocknungsgeschwindigkeit verbessert werden. Damit geht im allgemeinen auch eine bessere Wärmeabfuhr einher. Zum Anderen führt die Hydrophilierungsbehandlung im allgemeinen erst dazu, dass ausreichende Mengen des Insektizids auf der synthetischen Faser aufgebracht werden können. Insbesondere für den Einsatz als Pferdedecke hat sich herausgestellt, dass der Schritt der hydrophilien Ausrüstung der Synthesefasern dazu führt, dass Feuchtigkeit in Form von Schweiß oder Nässe im Vergleich zu herkömmlichen Pferdedecken aus Baumwolle oder Mischgeweben bis zu viermal schneller abgeführt werden kann. So ist das Trocknungsverhältnis bei der erfindungsgemäßen Vorrichtung nach Regeneinwirkung bis zu 1 0 Mal höher als bei Baumwolle. Dies ist bei der Ausgestaltung als Pferdedecke besonders vorteilhaft, da dem Pferd nach schweißtreibendem Ausritt die erfindungsgemäße Vorrichtung einfach übergehängt werden kann, ohne dass das Tier seinen lästigen Peinigern hilflos ausgeliefert ist. Eine solche trocknungsbeschleunigende Wirkung war besonders überraschend und wurde durch den Stand der Technik nicht nahegelegt.

Die Hydrophilierungsbehandlung kann sowohl mit der Faser als auch mit dem textilen Flächengebilde durchgeführt werden,

Nach dem Schritt der Hydrophilierung wird bevorzugt das textile Flächengebilde, z. B. als Breitware in einem speziellen Verfahren mit dem Insektizid ausgerüstet.

Der Auftrag des Insektizids auf die Faser soll erfindungsgemäß so erfolgen, dass der Tragekomfort sowie die Atmungsaktivität der Vorrichtung nicht beeinträchtigt werden.

Das Insektizid wird bevorzugt durch ein Foulard-Verfahren aufgebracht. Im Foulard-Verfahren wird das Textilgut regelmäßig und kontinuierlich durch eine im Tauchtrog liegende, das Insektizid oder eine das Insektizid enthaltende Zusammensetzung enthaltende Flotte gezogen und anschließend die überschüssige Lösung durch Abquetschen mit Gummiwalzen ins Gewebe gepresst. Das Foulardverfahren kann sowohl mit der Faser als auch mit dem textilen Flächengebilde durchgeführt werden. Das Verfahren kann dabei insbesondere, wie in Abschnitt 27 des Gebrauchsmusters DE 202005004056 U1 beschrieben, durchgeführt werden. Besonders bevorzugt wird eine Zusammensetzung des Insektizids, insbesondere Permethrin, die mindestens ein organisches Lösungsmittel sowie mindestens einen Emulgator enthält, in eine wässrige, die Faser enthaltende Appreturflotte eingetragen. Die Anwesenheit des Emulgators führt insbesondere zu einer gleichmäßigeren Verteilung des Permethrins in der Flotte und auf der Faser. Emulgatoren sind insbesondere anionische Tenside, wie Fettalkoholsulfate, Fettalkoholethersulfate, Olefin-/Paraffinsulfonate, Alkylbenzolsulfonate, nichtionische Tenside, wie Fettalkohol-Ethoxylate, Fettalkohol-Alkoxylate, Alkylpolyglukoside sowie kationische Tenside, wie Ammoniumchloride, Aminoxide, amphotere Tenside, Amine und ethoxylierte Amine,

Bevorzugte Emulgatoren sind insbesondere nichtionische Tenside, wie Fettalkohol-Ethoxylate, besonders bevorzugt C12-C15-Fettaikohol-Ethoxylate.

Besonders bevorzugt erfolgt nach dem Auftrag des Insektizids nach dem Foulard-Verfahren eine thermische Fixierung der Faser (Thermofixierung) bei erhöhter Temperatur, wie zum Beispiel oberhalb von 100°, bevorzugter oberhalb von 1 60°C, bei der es insbesondere zur Fixierung des Insektizids auf der Faser kommt.

In einer weiteren bevorzugten Ausführungsform wird das Insektizid durch das sogenannte Polymer-Coating-Verfahren aufgebracht. Dabei wird das Insektizid in eine mindestens ein polymeres Bindemittel sowie gegebenenfalls weitere Bestandteile, wie Lösungsmittel, Vernetzungsmittel, etc. enthaltende Zusammensetzung eingebracht. Anschließend wird die Bindemittel-haltige Zusammensetzung durch ein geeignetes Verfahren auf die Faser oder das textile Flächengebilde daraus aufgebracht und die Zusammensetzung auf der Faser oder dem textilen Flächegebilde getrocknet und/oder ausgehärtet. Das Polymer-Coating-Verfahren besitzt gegenüber einem Tränkverfahren den Vorteil, dass das Insektizid in einer polymeren Matrix eingebettet vorliegt, wodurch die Freisetzung des Insektizids über einen längeren Zeitraum möglich ist und das Insektizid generell gegenüber Auswaschen stabiler ist (s. z.B. Faulde, et al. J. Med. Entomol. 40(6): 935-941 (2003)). Über die Art des Matrixpolymers lässt sich dabei die Freisetzungskinetik des Insektizids in gewissem Ausmaß variieren. Hydrophile polymere Bindemittel, wie z.B. Polyesterpolyole, Polyacrylatpolyole, Polyetheresterpolyole, Polyutethanpolyole, die beispielsweise mit Polyisocyanaten gehärtet werden können, stellen eine bevorzugte Ausführungsform dar. Die Wahl der polymeren Bindemittel richtet sich auch nach der verwendeten Faser. Das polymere Bindemittel ist bevorzugt mit der Faser kompatibel, d.h. das gehärtete Bindemittel haftet auf der Faser. Weiterhin darf das polymere Bindemittel keine Wechselwirkung mit dem Insektizid eingehen, die zu einem Verlust der insektiziden Wirkung führen würde.

Beim genannten Polymer-Coating-Verfdhren kann beispielsweise in einem so genannten Beschichtungsstrich in einem direkten Verfahren, wie beispielsweise mit einem Rakelauftrag, die das Insektizid und das polymere Bindemittel enthaltende Beschichtungsmasse, auf das hydrophilierte textile Flächengebilde oder die hydrophilierte synthetische Faser aufgebracht werden. Alternativ zu einem Rakelauftrag ist auch ein indirekter Auftrag über eine Walze möglich. Vorteilhaft ist mit dem Polymer-Coating-Verfahren auch der einseitige Auftrag des Insektizids auf ein textiles Flächengebilde möglich, Das kann sich insbesondere dann günstig auswirken, wenn ein direkter Hautkontakt der Tiere mit dem Insektizid nicht erwünscht ist, weil es beispielsweise irritierend auf empfindliche Hautpartien wirken kann. Vorteilhaft wird das Insektizid daher nur auf einer Seite des textilen Flächengebildes aufgebracht. Zweckmäßig handelt es sich um die körperferne Außenseite des textilen Flächengebildes.

Das verwendete Insektizid vereint bevorzugt sowohl eine insektenabtötende als auch eine Repellent-Funktion in sich. Die

Repellent-Funktion verhindert, dass das Insekt sich der erfindungsgemäßen Schutzvorrichtung überhaupt nähert. Ein besonders bevorzugtes Beispiel eines Insektizides, dass sowohl eine insektenabtötende als auch insektenabstoßende (Repellent) Wirkung in sich vereint, ist das Permethrin (3-(2,2-Dichlorethenyl)-2,2-dimethyl-cyclopropan-carbonsäure-(3-phenoxyphenl)-methyl-ester das gemäß den voliegenden Erfindung als Insektizid verwendet wird.

Das In der erfindungsgemäßen Decke verwendete textile Flächengebilde liegt bevorzugt als Gewebe vor, wie als Wirk- oder Strickware oder als Vlies.

In einer besonders bevorzugten Ausführungsform der erfindungsgemäßen Vorrichtung weist das textile Fidchengebilde eine netzartige Struktur auf, dessen Lochgröße zweckmäßig in Kette mindestens 1,0 ± 0.2 mm, bevorzugter mindestens 1,5 ± 0,3 mm, noch bevorzugter mindestens 2,5 ± 0.3 mm und in Schuss zweckmäßig mindestens 1,2 ± 0,2 mm, bevorzugter mindestens 1,6 ± 0.3 mm, noch bevorzugter mindestens 2,7 ± 0,5 mm beträgt.

Im Gegensatz zu den bekannten netzartigen Pferdedecken bewirken die erfindungsgemäßen textilen Vorrichtungen im Bereich der Überdeckung des Tieres einen praktisch 100-%-igen Schutz vor Insekten, ohne auf den Tragekomfort der netzartigen textile Flächengebilde zu verzichten.

Die erfindungsgemäße Decke weist zweckmäßig Mittel zur Befestigung des textiles Flächengebildes an einem Tier auf. Derartige Mittel sind an sich bekannt und es kann beispielsweise auf die eingangs erwähnte DE 29609603 U1 verwiesen werden.

Die Erfindung betrifft weiterhin ein Verfahren zur Herstellung der erfindungsgemäßen Pferdedecke, das die folgenden Schritte umfasst:
- Bereitstellung eines textilen Flächengelldes aus synthetischen Fasern, die aus einem Fasermaterial bestehen, das aus der Gruppe ausgewählt wird, die besteht aus: Polyestern, Polyesteramiden, Polyacrylnitril, Polyethylen, Polypropylen, Modocryl, Polyvinylchlorid, Polyvinylalkohol, Polyurethan, Celluloseacetat, Viskose, Copolymere der genannten Polymere und physikalische Mischungen der genannten Fasermaterialien,
- Unterwerfen des texilen Flämindestens mindestens einer Hydrophlllerungsbehandlung,
- Ausstatten des textilen Flächengebildes mit Permethzin,
- Zuschneiden des so erhaltenen textilen Flächengeblides und
- Anbringen von Mitteln zu Befestigung des textilen FlächengebIldes an einem Tier.

Durch das erfindungsgemäße Verfahren ist ein dauerhafter Insektenschutz auch nach mehrmaligem Waschen der Vorrichtung gewährleistet.

Während des Herstellungsverfahrens kann zudem eine Einfärbung des Gewebes erfolgen.

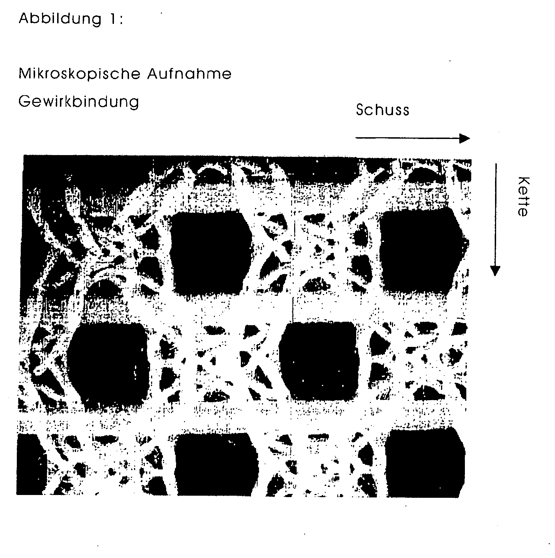

Gewebe und Decken aus dem textilen Flächengebilde In Form einer Strick-/Wirkware können darüber hinaus vorteilhaft mit einem sogenannten Schusseintrag gestaltet werden. Dabei wird im allgemeinen ein zusätzlicher, insbesondere dickerer bzw. weniger dehnbarer Faden bereitgestellt (vgl. Abbildung 1). Dieser führt zu einer Verstärkung des Gewebes, wodurch die Lochgrößen des netzartigen, atmungsaktiven Gewebes selbst bei Zugbelastung kaum einer Veränderung unterliegen. Dadurch bleibt die Ware regeimäßig waschstabiler und zeigt eine verbesserte Resistenz gegenüber mechanischen Einflüssen, wie beispielsweise auch beim Reiben oder Schaben der Faseroberfläche etwa an Stallwänden durch das zu schützende Tier. Der zusätzliche Schußeintrag ist insbesondere bei den erfindungsgemäß bevorzugten netzartigen Geweben mit relativ hoher Lochgröße besonders vorteilhaft, da diese netzartigen Gewebe In der Regel sehr dehnbar sind.

Bevorzugt verwendet das erfindungsgemäße Verfahren weiterhin mindestens eine der folgenden weiteren Maßnahmen:
- Durchführung der Hydrophillerungsbehandlung der synthetischen Faser mit einem Auszugsverfahren, d.h. durch Aufpfropfen bzw. Aufpolymerisieren hydrophiler Monomere auf die Oberfläche der synthetischen Verfahren, wie nach dem Intera-Prozeß (US5855623),
- Anschlleßend Aufbringen des Insektlzids auf die synthetische Faser oder das textile Flächengebilde durch ein Foulard-Verfahren, oder Aufbringen des Insektizids auf die synthetische Faser oder das textile Flächengebilde durch ein Polymer-Coating-Verfahren,
- Aufbringen des Insektlzids auf einer Seite des textilen Flächengebildes,
- Aufbringen des Insektizids oder einer das Insektlzid enthaltenden Zusammensetzung mittels Rakelauftrag, und/oder
- Aufbringen des Insektizids oder einer das Insektizid enthaltenden Zusammensetzung mittels Walzenauftrag.

## Patentansprüche

1. Pferdedecke zum Schutz von Tieren vor Insekten, umfassend ein textiles Flächengebilde aus synthetischen Fasern, die aus einem Fasermaterial bestehen, das aus der Gruppe ausgewählt wird, die besteht aus Polyestern, Polyesteramiden, Polyacrylnitril, Polyethylen, Polypropylen, Modacryl, Polyvinylchlorid, Polyvinylalkohol, Polyurethan, Celluloseacetat, Viskose, Copolymere der genannten Polymere und Mischungen der genannten Fasermaterialien, wobei
a) das textile Flächengebilde wenigstens Permethrin als Insektizid aufweist;
b) die Fasern einer Hydrophilierungsbehandlung unterworfen sind,
c) wobei das textile Flächengebilde eine netzartige Struktur aufweist,
d) wobei das textile Flächengebilde durch zusätzlichen Schusseintrag verstärkt ist, und
e) das textile Flächengebilde Mittel zur Befestigung an einem Tier aufweist.

2. Pferdedecke nach Anspruch 1, worin die Hydrophilierungsbehandlung mit einem Auszugsverfahren durchgeführt wird.

3. Pferdedecke nach einem der Ansprüche 1 oder 2, worin das Insektizid durch ein Foulard-Verfahren aufgebracht ist.

4. Pferdedecke nach einem der Ansprüche 1 oder 2, worin das Insektizid durch das Polymer-Coating-Verfahren aufgebracht ist.

5. Pferdedecke nach Anspruch 4, worin das Insektizid auf einer Seite des textilen Flächengebildes aufgebracht ist.

6. Pferdedecke nach einem der Ansprüche 1 bis 5, worin das textile Flächengebilde als Gewebe vorliegt.

7. Pferdedecke nach einem der Ansprüche 1 bis 6, worin das textile Flächengebilde als Wirk- oder Strickware oder als Vlies vorliegt.

8. Verfahren zur Herstellung einer Pferdedecke in Form einer Strick-/Wirkware mit einer netzartigen Struktur, welches die folgenden Schritte umfasst:
- Bereitstellung eines textilen Flächengebildes aus synthetischen Fasern, die aus einem Fasermaterial bestehen, das aus der Gruppe ausgewählt wird, die besteht aus, Polyestern, Polyesteramiden, Polyacrylnitril, Polyethylen, Polypropylen, Modacryl, Polyvinylchlorid, Polyvinylalkohol, Polyurethan, Celluloseacetat, Viskose, Copolymere der genannten Polymere und Mischungen der genannten Fasermaterialien,
- Unterwerfen des textilen Flächengebildes mindestens einer Hydrophilierungsbehandlung
- Ausrüsten des textilen Flächengebildes mit Permethrin,
- Zuschneiden des so erhaltenen textilen Flächengebildes,
- Anbringen von Mittel zur Befestigung des textilen Flächengebildes an einem Tier, und
- Verstärkung des textilen Flächengebildes durch einen zusätzlichen Schusseintrag, wozu ein zusätzlicher dicker bzw. wenig dehnbarer Faden bereitgestellt wird.

9. Verfahren nach Anspruch 8 das mindestens eine der folgenden Maßnahmen beinhaltet
- Durchführung der Hydrophilierungsbehandlung mit der synthetischen Faser oder dem textilen Flächengebilde daraus mit einem Auszugsverfahren,
- Aufbringen des Permethrins auf die synthetische Faser oder das textile Flächengebilde durch ein Foulard Verfahren,
- Aufbringen des Permethrins auf die synthetische Faser oder das textile Flächengebilde durch ein Polymer-Coating-Verfahren,
- Aufbringen des Permethrins auf einer Seite des textilen Flächengebildes,
- Aufbringen des Permethrins oder einer das Permethrin enthaltenden Zusammensetzung mittels Rakelauftrag,
- Aufbringen des Permethrins oder einer das Permethrin enthaltenden Zusammensetzung mittels Walzenauftrag.

## Claims

1. Horse blanket for protecting animals against insects, comprising a textile flat structure of synthetic fibres which are made of a fibre material which is chosen from the group consisting of polyesters, polyester amides, polyacrylonitrile, polyethylene, polypropylene, modacrylic, polyvinyl chloride, polyvinyl alcohol, polyurethane, cellulose acetate, viscose, copolymers of the polymers mentioned and mixtures of the fibre materials mentioned, wherein
a) the textile flat structure contains at least permethrin as an insecticide;
b) the fibres are subjected to a hydrophilizing treatment,
c) wherein the textile flat structure has a reticulated structure,
d) wherein the textile flat structure is reinforced by additional weft insertion, and
e) the textile flat structure comprises means for fastening on an animal.

2. Horse blanket according to claim 1, wherein the hydrophilizing treatment is carried out by an exhaust process.

3. Horse blanked according to one of claims 1 or 2, wherein the insecticide is applied by a padding process.

4. Horse blanket according to one of claims 1 or 2, wherein the insecticide is applied by the polymer coating process.

5. Horse blanket according to claim 4, wherein the insecticide is applied to one side of the textile flat structure.

6. Horse blanket according to one of claims 1 to 5, wherein the textile flat structure is in the form of a woven fabric.

7. Horse blanket according to one of claims 1 to 6, wherein the textile flat structure is in the form of a knitted or stitch fabric or a nonwoven.

8. Process for the production of a horse blanket in the form of a stitch/knitted fabric with a reticulated structure, which comprises the following steps:
- provision of a textile flat structure of synthetic fibres which are made of a fibre material which is chosen from the group consisting of polyesters, polyester amides, polyacrylonitrile, polyethylene, polypropylene, modacrylic, polyvinyl chloride, polyvinyl alcohol, polyurethane, cellulose acetate, viscose, copolymers of the polymers mentioned and mixtures of the fibre materials mentioned,
- subjecting of the textile flat structure to at least one hydrophilizing treatment,
- finishing of the textile flat structure with permethrin,
- cutting to size of the textile flat structure obtained in this way,
- attachment of means for fastening the textile flat structure on an animal, and
- reinforcing of the textile flat structure by an additional weft insertion, for which an additional thick or not particularly extendable thread is provided.

9. Process according to claim 8, which comprises at least one of the following measures:
- carrying out of the hydrophilizing treatment with the synthetic fibre or the textile flat structure therefrom by an exhaust process,
- application of the permethrin to the synthetic fibre or the textile flat structure by a padding process,
- application of the permethrin to the synthetic fibre or the textile flat structure by a polymer coating process,
- application of the permethrin to one side of the textile flat structure,
- application of the permethrin or a formulation containing the permethrin by means of doctor blade application,
- application of the permethrin or of a formulation containing the permethrin by means of roller application.

## Revendications

1. Couverture de cheval pour protéger les animaux des insectes, comprenant un produit textile plat fait de fibres synthétiques qui sont constituées par une matière fibreuse choisie dans le groupe composé de polyesters, polyesteramides, polyacrylonitrile, polyéthylène, polypropylène, modacryle, polychlorure de vinyle, alcool polvinylique, polyuréthane, acétate de cellulose, viscose, copolymères des polymères cités et mélanges des matières fibreuses citées, dans laquelle
a) le produit textile plat présente au moins de la perméthrine en qualité d'insecticide,
b) les fibres sont soumises à un traitement d'hydrophilisation,
c) dans laquelle le produit textile plat présente une structure réticulée,
d) dans laquelle le produit textile plat est renforcé par une insertion de trame additionnelle, et
e) le produit textile plat présente des moyens permettant de le fixer à un animal.

2. Couverture de cheval selon la revendication 1, dans laquelle le traitement d'hydrophilisation est exécuté avec un procédé d'extraction.

3. Couverture de cheval selon l'une des revendications 1 ou 2, dans laquelle l'insecticide est appliqué par un procédé au foulard.

4. Couverture de cheval selon l'une des revendications 1 ou 2, dans laquelle l'insecticide est appliqué par le procédé d'enduction de polymère.

5. Couverture de cheval selon la revendication 4, dans laquelle l'insecticide est appliqué sur une face du produit textile plat.

6. Couverture de cheval selon l'une des revendications 1 à 5, dans laquelle le produit textile plat se présente sous la forme d'un tissu.

7. Couverture de cheval selon l'une des revendications 1 à 6, dans laquelle le produit textile plat se présente sous la forme d'un tissu à mailles, d'un tissu tricoté ou d'un non tissé.

8. Procédé de fabrication d'une couverture de cheval se présentant sous la forme d'un tissu tricoté ou à maille possédant une structure réticulée, lequel procédé comprend les étapes suivantes :
- préparation d'un produit textile plat fait de fibres synthétiques qui sont constituées par une matière fibreuse qui est choisie dans le groupe composé de polyesters, polyesteramides, polyacrylonitrile, polyéthylène, polypropylène, modacryle, polychlorure de vinyle, alcool polvinylique, polyuréthane, acétate de cellulose, viscose, copolymères des polymères cités et mélanges des matières fibreuses citées,
- soumission du produit textile plat à au moins un traitement d'hydrophilisation
- traitement du produit textile plat avec de la perméthrine,
- coupe du produit textile plat obtenu à la dimension,
- ajout de moyens pour la fixation du produit textile plat sur un animal, et
- renforcement du produit textile plat par une insertion de trame additionnelle, pour laquelle on prépare un fil additionnel plus épais ou moins extensible.

9. Procédé selon la revendication 8, comprenant au moins l'une des dispositions suivantes :
- exécution du traitement d'hydrophilisation avec la fibre synthétique ou le produit textile plat qui en résulte dans à un procédé d'extraction,
- application de la perméthrine sur la fibre synthétique ou sur le produit textile plat par un procédé au foulard,
- application de la perméthrine sur les fibres synthétiques ou sur le produit textile plat textile plat par un procédé d'enduction de polymère
- application de la perméthrine sur une face du produit textile plat,
- application de la perméthrine ou une composition contenant de la perméthrine par dépôt à la racle,
- application de la perméthrine ou une composition contenant de la perméthrine par dépôt au rouleau.
